## Europäisches Patentamt

## European Patent Office

## Office européen des brevets

(11) Veröffentlichungsnummer: **0 172 396**
**A2**

# (12) EUROPÄISCHE PATENTANMELDUNG

(21) Anmeldenummer: 85108758.5

(22) Anmeldetag: 12.07.85

(51) Int. Cl.⁴: **B 01 D 53/36**
**B 01 J 35/10**

(30) Priorität: 22.08.84 DE 3430886

(43) Veröffentlichungstag der Anmeldung:
26.02.86 Patentblatt 86/9

(84) Benannte Vertragsstaaten:
AT BE CH FR GB IT LI LU NL SE

(71) Anmelder: DIDIER-WERKE AG
Lessingstrasse 16-18
D-6200 Wiesbaden(DE)

(71) Anmelder: Didier Engineering GmbH
Alfredstrasse 28 Postfach 10 09 45
D-4300 Essen 1(DE)

(72) Erfinder: Wagener, Dietrich, Prof. Dr.
Ahrfeldstrasse 26
D-4300 Essen(DE)

(72) Erfinder: Laue, Karl Heinrich
Bergische Strasse 41
D-4320 Hattingen 16(DE)

(72) Erfinder: Wunderlich, Egmar
Kölner Strasse 418
D-4330 Mülheim(DE)

(72) Erfinder: Sander, Theo
Cäsarstrasse 23
D-4300 Essen 1(DE)

(72) Erfinder: Flockenhaus, Claus, Prof. Dr.
Tersteegenweg 16
D-4300 Essen 1(DE)

(72) Erfinder: Hackler, Erich
Kettwiger Weinberg 6
D-4300 Essen 18(DE)

(72) Erfinder: Levkov, Blagoje, Dr.
Rudolf-Vogt-Strasse 41
D-6200 Wiesbaden(DE)

(72) Erfinder: Grimm, Daniel
Hauptstrasse 10
D-6229 Schlangenbad-Bärstadt(DE)

(72) Erfinder: Kalner, Hartmut, Dr.
Sauerbruchstrasse 1a
D-6200 Wiesbaden 12(DE)

(72) Erfinder: Stein, Hermann
Rossbachhöhe 40
D-6204 Taunusstein 4(DE)

(74) Vertreter: Brückner, Raimund
c/o Didier-Werke AG Lessingstrasse 16-18
D-6200 Wiesbaden(DE)

(54) Katalysator zum Abscheiden von Stickoxiden aus Verbrennungsabgasen.

(57) Ein Katalysator zum Abscheiden von Stickoxiden aus mit Staub verunreinigten Verbrennungsabgasen mittels Ammniak soll aus einfach entsorgbarem Material bestehen, das bei der Katalyse weitgehend genutzt wird. Der Katalysator ist aus einzelnen keramischen Formkörpern 1 mit poriger Oberfläche und mit Passagen 3 für die Abgasdurchströmung aufgebaut. Die Formkörper 1 weisen eine Abriebfestigkeit auf, die so bemessen ist, daß der Staub des die Passagen 3 durchströmenden Abgases Katalysator-Oberfläche abreibt, wobei der Staub den Abrieb mitnimmt.

./...

FIG. 2
DETAIL "X"

09.08.1980 0172396
KXR/Ga/Sc
PA 3404

DIDIER ENGINEERING GMBH
Alfredstraße 28
4300 Essen 1

Katalysator zum Abscheiden von
Stickoxiden aus Verbrennungsabgasen

Die Erfindung betrifft einen Katalysator zum Abscheiden von Stickoxiden aus mit Staub verunreinigten Verbrennungsabgasen mittels Ammoniak.

In Abgasen von Verbrennungseinrichtungen enthaltene Stickoxide können durch katalytische Reduktion mittels Ammoniak zu ungefährlichem Stickstoff und Wasser umgewandelt werden. Hierfür werden die Abgase üblicherweise über geschüttete Katalysatoren bei gleichzeitiger Zuführung von gasförmigem, flüssigem oder in Wasser gelöstem Ammoniak geleitet.

Enthalten die Abgase größere Mengen Staub oder Ruß, dann wird dadurch die Katalysatorschüttung schnell verstopft. Enthalten die Abgase außerdem noch Katalysatorgifte, wie Schwefel- oder Chlorverbindungen, dann deaktivieren diese die katalytisch wirkenden Oberflächen. Dies insbesondere dann, wenn vergiftbare Reaktionsbeschleuniger zur Verwendung kommen.

Aktive Katalysatorsubstanzen und Trägermaterialien, die den unterschiedlichen Katalysatorgiften widerstehen, sind teuer und aufgrund des Gehalts an Schwermetall solcher Substanzen nur unter Schwierigkeiten zu entsorgen. Leicht - beispielsweise in einem Hochofen - entsorgbares Katalysatormaterial, wie $Fe_2O_3$, neigt zu der genannten Vergiftung.

Insgesamt führen also Staub und Katalysatorgifte dazu, daß die aktiven Oberflächenbereiche des Katalysators bald blockiert sind, so daß die Aktivität des Katalysators gemindert ist, obwohl an sich unter der Katalysatoroberfläche noch aktives Katalysatormaterial zur Verfügung steht.

Aufgabe der Erfindung ist es, einen Katalysator der eingangs genannten Art vorzuschlagen, der aus einem einfach entsorgbaren Material besteht und bei dem das Katalysatormaterialvolumen weitgehend ausgenutzt wird.

Erfindungsgemäß ist obige Aufgabe bei einem Katalysator der eingangs genannten Art dadurch gelöst, daß der Katalysator aus einzelnen keramischen Formkörpern mit poriger Oberfläche und mit Passagen für die Abgasdurchströmung aufgebaut ist, und daß die Formkörper eine Abriebfestigkeit aufweisen, die so bemessen ist, daß der Staub des die Passage durchströmenden Abgases die Katalysator-Oberfläche abreibt, wobei der Staub den Abrieb mitnimmt.

Dadurch ist erreicht, daß die aktive Oberfläche stetig erneuert wird. Der Katalysator hat eine durch den Abrieb begrenzte, vorher bestimmbare Lebensdauer bei gleichbleibend hoher Aktivität. Es läßt sich ein leicht entsorgbares Material für den Katalysator verwenden, dessen Abrieb zusammen mit dem Staub entsorgt werden kann.

In bevorzugter Ausgestaltung der Erfindung sind zwischen den Formkörpern Durchtrittsöffnungen quer zur Strömungsrichtung in den Passagen vorgesehen. Dadurch erfolgt zwischen den einzelnen Formkörperlagen ein Druckausgleich, durch den grobe Staubpartikel aus der Strömungsrichtung in den Passagen abgelenkt werden, so daß sie in einem Winkel, insbesondere einem Winkel zwischen 10° und 30°, auf die aktiven Katalysator-Oberflächen treffen. Dies verbessert den Reinigungseffekt.

Vorzugsweise weisen die Formkörper eine Länge zwischen 10 cm und 50 cm auf. Durch die Kürze der Formkörper ist das Schrägauftreffen der Staubpartikel verbessert.

Weitere bevorzugte Ausgestaltungen der Erfindung ergeben sich aus der folgenden Beschreibung. In der Zeichnung zeigen:

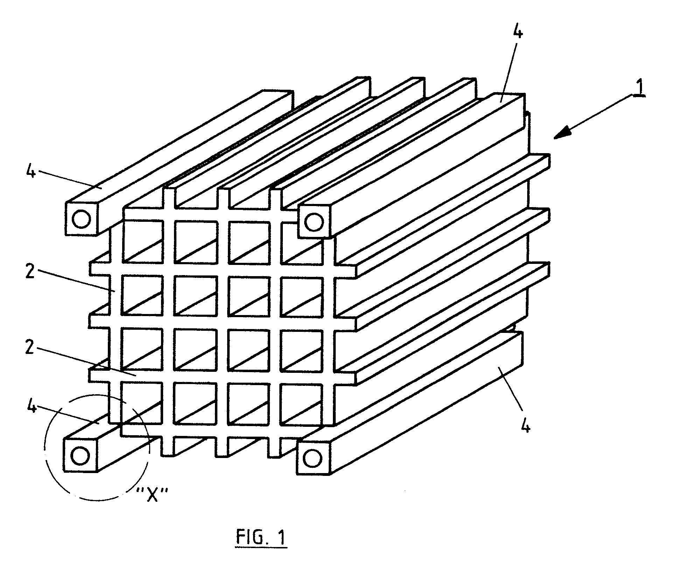

Fig. 1 einen Katalysator-Formkörper in perspektivischer Ansicht,

Fig. 2 eine perspektivische Ansicht eines Eckbereiches des Formkörpers nach Fig. 1, vergrößert,

Fig. 3 eine Seitenansicht eines Beinendes des Formkörpers, und

Fig. 4 eine Seitenansicht des anderen Beinendes des Formkörpers.

Zur Herstellung der Formkörper wurde von einer ersten Substanz mit etwa folgender Zusammensetzung ausgegangen:

$$
\begin{array}{ll}
88,7 & \% \ Fe_2O_3 \\
3,2 & \% \ Fe_3O_4 \\
0,11 & \% \ MnO \\
0,02 & \% \ CaO \\
4,5 & \% \ SiO_2 \\
1,17 & \% \ Al_2O_3 \\
0,01 & \% \ MgO \\
0,04 & \% \ TiO_2 \\
0,007 & \% \ V_2O_5 \\
0,16 & \% \ P_2O_5
\end{array}
$$

und Spuren von As, Pb, Cu, Cr.

Diese Substanz zeigt für sich bei stöchiometrischem Verhältnis der Stickoxide und des Ammoniaks bei den folgenden Temperaturen folgenden Reduktionsumsatz in %:

| Temperatur/°C | Red/% |
|---|---|
| 300 | 93 |
| 360 | 97 |
| 390 | 94 |
| 400 | 95 |

wobei der Reduktionsumsatz (Red/%) sich errechnet aus der Differenz des eingangs- und des ausgangsseitigen Stickoxidgehalts, bezogen auf den eingangsseitigen Stickoxidgehalt.

Als überraschend hat sich herausgestellt, daß diese Substanz, die an sich eine Mischung üblicher Katalysatorsubstanzen ist, eine gute Beschleunigung der Stickoxidreaktion bewirkt.

Zur Herstellung der Formkörper wurde eine zweite Substanz mit etwa folgender Zusammensetzung verwendet:

$$46\ \%\quad Cr_2O_3$$
$$28\ \%\quad Fe_2O_3$$
$$15\ \%\quad Al_2O_3$$
$$10\ \%\quad MgO$$
$$1\ \%\quad SiO_2.$$

Bei stöchiometrischem Verhaltnis der Stickoxide und des Ammoniaks ergab sich hier bei den folgenden Temperaturen die folgenden Reduktionsumsatze in % (Red/%):

| Temperatur/°C | Red/% |
|---------------|-------|
| 250 | 95 |
| 300 | 98 |
| 350 | 99 |
| 400 | 95 |

Zur Herstellung der Formkörper werden beide genannten Substanzen miteinander je nach dem Einsatzfall gemischt. Unterschiedliche Mischungen zeigten bezogen auf die charakteristischen folgenden Anteile an Chromoxid bei folgenden Temperaturen folgende Reduktionsumsätze (%):

| $Cr_2O_3$/% | Temperatur/°C | | | | |
|---|---|---|---|---|---|
| | 250°C | 300°C | 350°C | 400°C | 450°C |
| 10 | 72 % | 95 % | 98 % | 97 % | 95 % |
| 5 | 65 % | 93 % | 97 % | 98 % | 98 % |
| 1 | 55 % | 82 % | 93 % | 98 % | 98 % |

Bei Braunkohlefeuerungen, bei denen nach dem Feuerungskessel, abhangig von Reisezeit des Kessels, Lastfall und Auslegung, Abgastemperaturen zwischen 250°C und 350°C auftreten, wird ein Anteil von Chromoxid ($Cr_2$) in der Mischung zwischen 5 Gew.-% und 20 Gew.-% gewahlt.

Bei Schmelzkammerfeuerungen für Ballast-Steinkohle, die unter hohen Temperaturen verbrannt wird, liegen die Abgastemperaturen je nach Reisezeit des Feuerungskessels, Lastfall und Auslegung bei etwa 350°C bis 450°C. Der Chromoxid-Anteil wird dann auf weniger als 1 Gew.-% eingestellt.

Trockenfeuerungen für Vollwertkohle haben gewohnlich Abgastemperaturen im Bereich von 320°C bis 420°C. In diesem Fall wird eine Mischung der beiden Substanzen eingestellt, in der ein Chromoxid-Anteil zwischen 1 Gew.-% und 5 Gew.-% vorhanden ist.

Die Mischung der beiden genannten Substanzen enthalt relativ wenig $Al_2O_3$, jedoch mehr $SiO_2$. Dadurch ist erreicht, daß das $Al_2O_3$ unter dem Einfluß von Schwefeltrioxid nur wenig zur Sulfat-Bildung neigt. Das $SiO_2$ tragt bei Saurebindung zu einem festen Stützgerüst für die Formkorper bei. Es zeigte sich, daß insbesondere saure Bindungen des Substanzgemisches besonders porose und feste Formkorper zu gestalten erlauben. Es lassen sich dadurch dünnwandige, tragfahige Formkorper auf einfache und billige Art herstellen. Die Herstellung kann beispielsweise durch Gießen mit nachfolgendem Tempern oder unter Zusatz eines Hilfsmittels durch Strangpressen mit nachfolgendem Tempern erfolgen.

Bei den verschiedenen Feuerungen treten je nach den Einsatzkohlen Staube unterschiedlicher Zusammensetzung auf. Entsprechend der unterschiedlichen Zusammensetzung der Staube und ihrer unterschiedlichen physikalischen Konsistenz, werden die Temper-Temperaturen zwischen 300°C und 600°C und Saurezugaben bei der Herstellung des Katalysators gewahlt. Als Sauren werden $H_2SO_4$, $HNO_3$, $H_3PO_4$, HCL, HF oder ahnliche Sauren eingesetzt. Diese immunisieren zusatzlich den Katalysator gegen Kontaktvergiftung.

Bei Schleißlagen wird ein Sauregrad von etwa 20 % gewahlt. Bei Braunkohle hat sich ein Sauregrad von 6 % als günstig erwiesen. Bei Steinkohle wird ein Sauregrad von etwa 4 % gewählt. Bei Ballastkohle wird mit einem Säuregrad von 2 % gearbeitet. Bei Trockenfeuerungen für Vollwertkohle kann der Sauregrad niedriger gewählt werden.

Die unterschiedlichen Staube unterscheiden sich u.a. auch in ihrer Korngrößenverteilung. So liegt beispielsweise bei Stäuben aus der genannten Schmelzkammerfeuerung der mittlere Korndurchmesser zwischen 18µm und 20µm. Die Feinstkorn-Abmessungen reichen bis 1µm. Das Kornspektrum endet bei 90µm. Um zu vermeiden, daß sich Staub des mittleren Korndurchmessers in den Makroporen des Katalysators absetzt, wird der mittlere Porendurchmesser des Katalysators so bemessen, daß er kleiner ist als der mittlere Korndurchmesser des Staubes. Vorzugsweise liegt der mittlere Makroporendurchmesser des Katalysators zwischen 1/4 und 3/4 des mittleren Korndurchmessers des Staubes. Als günstig hat sich erwiesen, wenn der mittlere Makroporendurchmesser des Katalysators etwa halb so groß ist wie der mittlere Korndurchmesser. Im genannten Beispielsfall beträgt der mittlere Makroporendurchmesser des Katalysators etwa 10µm. Dadurch ist erreicht, daß sich zunächst gröbere Staubpartikel über den Poren sammeln und ein Eindringen von feinsten Staubpartikeln in die Poren durch Filterung verhindern. Hat sich eine starke Filterschicht aufgebaut, dann wird diese durch den den Katalysator durchströmenden Staub abgetragen. Dadurch ist vermieden, daß sich Feinstpartikel des Staubes in den Makroporen des Katalysators dicht und tief absetzen, so daß sie nur herausgelöst werden könnten, wenn ein sehr starker Katalysatorabtrieb in Kauf genommen würde.

Reicht der grobkörnige Anteil des Staubes nicht aus, um die Filterschicht lösen zu können, kann der grobe Staubanteil künstlich erhöht werden. Dies kann beispielsweise durch Verzicht auf Feinstaufmahlung oder durch gezielten Zusatz von grobkörnigem Material erfolgen. Solches grobkörnige Material, wie beispielsweise Sand oder Grobkornfraktion aus vorhandenem Flugstaub, die dem E-Filter entnommen werden kann, wird vorzugsweise hinter dem Verbrennungskessel, jedoch vor dem Katalysator zugeführt.

Der aus den genannten Substanzen hergestellte Katalysator-Formkörper bildet einen Gitterstein 1, dessen Lange, Breite und Hohe jeweils zwischen 10 cm und 50 cm liegt.

Am Gitterstein 1 sind zwischen Stegen 2 Passagen 3 gebildet. Die Stegstarke und der Passagenquerschnitt werden in Abhängigkeit von der Gasbelastung und dem Staubgehalt bemessen. Bei einer relativ niedrigen Staubbelastung von 20 mg bis 350 mg Staub/m³ Gas wird eine geringe Stegstarke von 2 mm bis 3 mm und ein kleiner Passagenquerschnitt von 8 mm bis 10 mm im Quadrat gewahlt. Mittlere Passagenquerschnitte von 10 bis 15 mm im Quadrat und eine entsprechend größere Stegstarke wird bei einer Staubbelastung von 350 mg bis 25000 mg Staub/m³ Gas gewahlt. Große Passagenquerschnitte von 10 bis 20 mm im Quadrat bei entsprechend größerer Stegstarke werden bei Staubgehalten von 25000 mg bis 50000 mg Staub/m³ Gas gewahlt.

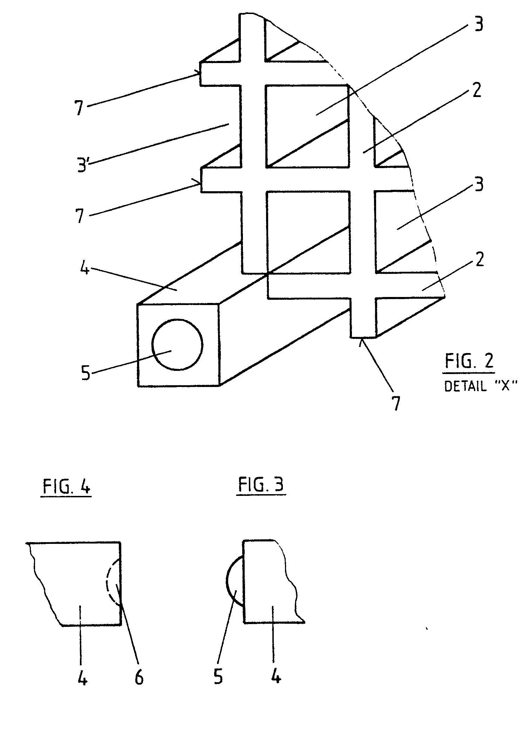

Der Gitterstein 1 weist an seinen Ecken die Stege 2 überragende Beine 4 auf (vgl. Fig. 2). Die Beine 4 überragen die Stege 2 entweder an beiden Stirnseiten, zu denen die Passagen 3 offen sind, oder nur an einer Stirnseite. Am einen Ende jedes Beines 4 ist ein Zentriernocken 5 ausgebildet. Eine entsprechende Hohlung 6 ist am anderen Ende jedes Beines 4 ausgebildet.

Die Stege 2 bilden außen am Gitterstein 1 Anschlagflachen 7, die in der Fluchtlinie der Beine 4 liegen. Beim dichten Nebeneinanderstellen von Gittersteinen 1 entstehen daduch auch zwischen benachbarten Gittersteinen Passagen 3'.

Zum Aufbau des Katalysators werden die Gittersteine 1 dicht nebeneinander gestellt. Auf die so gebildete eine Lage der Gittersteine werden mehrere weitere Lagen Gittersteine aufgesetzt, wobei die Zentriernocken 5 der Gittersteine der einen Lage in die Höhlungen 6 der Beine 4 der Gittersteine der nachsten Lage greifen. Dadurch entstehen zwischen den Stegen 2 der Gittersteinlagen Abstande, die durch die Lange der Beine 4 bestimmt sind. Die Beine 4 werden so bemessen, daß der Abstand zwischen den Lagen zwischen 5 mm und 100 mm liegt. Durch diesen Aufbau sind zwischen den Gittersteinlagen Durchtrittsöffnungen quer zur Strömungsrichtung in den Passagen 3 gebildet.

In der Praxis ist damit zu rechnen, daß sich in den Passagen 3 unterschiedliche Drücke aufbauen, sei es wegen Fertigungstoleranzen oder wegen unterschiedlichen Staubablagerungen in den Passagen 3. Die Durchtrittsöffnungen in Querrichtung zur Strömungsrichtung in den Passagen 3 schaffen nach jeder Lage einen Druckausgleich. Infolge dieses Druckausgleiches erhalt die die Passagen 3 durchströmende Gas- und Staubmasse eine Strömungskomponente quer zur Strömungsrichtung in den fluchtenden Passagen 3 der Gittersteinlagen. Insbesondere grobe Staubpartikel erfahren dadurch eine Strömungsablenkung in einem Winkel zwischen 10° und 30° zur Langsrichtung der Passagen. Solche Staubpartikel treffen dadurch in einem spitzen Winkel zwischen 10° und 30° auf die Wandungen des Katalysators. Die Folge hiervon ist, daß an der Oberfläche des Katalysators haftender und die Poren schließender Feinstaub durch den Grobstaub abgerieben wird. Haben sich beispielsweise durch Chlorid- oder Sulfatbildungen an dem Katalysator inaktive Oberflächen gebildet, die morsch sind, dann werden auch diese durch den Grobstaub abgetragen. Es hat sich gezeigt, daß die Tiefe einer inaktiv gewordenen Schicht am Katalysator bei etwa 0,002 mm liegt, so daß sie vom durchströmenden Staub leicht abgerieben werden kann. Nach dem Abrieb der Katalysatoroberfläche steht bis zum Verschleiß des Katalysators immer frische Katalysatoroberflache zur Verfügung. Der Katalysator zeigt also unter Staubbelastung einen Selbstreinigungseffekt.

Der Katalysatorabrieb wird mit dem Staub der Verwendung der Flugasche zugeführt. Verschlissene Gittersteine lassen sich austauschen und in einem Hochofen problemlos entsorgen.

Es hat sich gezeigt, daß eine tägliche Reinigung der Passagen durch Blasen mit Fremdmitteln, wie Dampf oder Luft, gegebenenfalls genügt. Bei der Reinigung ist darauf zu achten, daß im Katalysator nicht durch überhöhten Druck Feinststaub in die Poren des Katalysators gedrückt wird. Flüssigkeitszutritt oder Kondensationserscheinungen im Katalysator sollten vermieden werden, da der Feinststaub sonst zur Zementierung neigt.

Im Rahmen der Erfindung liegen zahlreiche weitere Ausführungsbeispiele. So können beispielsweise die Querschnitte der Passagen auch wabenförmig oder rund sein. Es ist dabei darauf zu achten, daß die Lange der Passagen nicht so groß ist, daß die durch den Druckausgleich zwischen den Gittersteinlagen erfolgende Ablenkung des Grobstaubes keine wesentliche schräge Staubbeaufschlagung der Katalysatoroberfläche zur Folge hat. Die Gittersteinlage, die dem Eintritt des staubbeladenen Abgases zunächstliegt, ist besonders belastet. Um einen frühzeitigen Verschleiß zu verhindern, lassen sich dort Gittersteine einsetzen, die durch entsprechende Saurebehandlung eine größere Harte haben als die Gittersteine der anderen Lagen.

09.08.1984 0172396
KXR/Ga/Sc
PA 3404

DIDIER ENGINEERING GMBH
Alfredstraße 28
4300 Essen 1

Katalysator zum Abscheiden von
Stickoxiden aus Verbrennungsabgasen

P a t e n t a n s p r ü c h e :

1. Katalysator zum Abscheiden von Stickoxiden aus mit Staub verunreinigten Verbrennungsabgasen mittels Ammoniak, dadurch gekennzeichnet, daß der Katalysator aus einzelnen keramischen Formkörpern (1) mit poriger Oberfläche und mit Passagen (3) für die Abgasdurchströmung aufgebaut ist und daß die Formkörper (1) eine Abriebfestigkeit aufweisen, die so bemessen ist, daß der Staub des die Passagen (3) durchströmenden Abgases die Katalysator-Oberflache abreibt, wobei der Staub den Abrieb mitnimmt.

2. Katalysator nach Anspruch 1, dadurch gekennzeichnet, daß zwischen den Formkörpern (1) Durchtrittsoffnungen quer zur Strömungsrichtung in den Passagen (3) vorgesehen sind.

3. Katalysator nach Anspruch 2, dadurch gekennzeichnet, daß die Höhe der Durchtrittsöffnungen und die Lange der Passagen (3) so bemessen sind, daß die Passagen (3) durchströmender Staub in Winkeln zwischen 10° und 30° auf die Passagenwandung trifft.

4. Katalysator nach einem der vorhergehenden Ansprüche, dadurch gekennzeichnet, daß die Durchtrittsöffnungen durch Beine (4) des Formkörpers (1) gebildet sind.

5. Katalysator nach einem der vorhergehenden Ansprüche, dadurch gekennzeichnet, daß am einen Ende der Beine (4) Zentriernocken (5) und am anderen Ende diesen entsprechende Höhlungen (6) vorgesehen sind.

6. Katalysator nach einem der vorhergehenden Ansprüche, dadurch gekennzeichnet, daß außen an dem Formkörper (1) Anschlagflachen (7) ausgebildet sind, die parallel zu den Passagen (3) verlaufen.

7. Katalysator nach einem der vorhergehenden Ansprüche, dadurch gekennzeichnet, daß die Formkörper (1) eine Länge zwischen 10 cm und 50 cm
aufweisen.

8. Katalysator nach einem der vorhergehenden Ansprüche, dadurch gekennzeichnet, daß die Durchtrittsöffnungen eine Höhe zwischen 0,5 cm und 10 cm
aufweisen.

9. Katalysator nach einem der vorhergehenden Ansprüche, dadurch gekennzeichnet, daß der mittlere Durchmesser der Poren des Katalysators
zwischen 1/4 und 1/3, insbesondere 1/2, des mittleren Korndurchmessers
des Staubes beträgt.

1/2

FIG. 1

2/2

0172396

FIG. 2
DETAIL "X"

FIG. 4          FIG. 3